# EUROPÄISCHE PATENTSCHRIFT

(11) **EP 2 037 091 B1**
(45) Veröffentlichungstag und Bekanntmachung des Hinweises auf die Patenterteilung: **26.01.2011**
(21) Anmeldenummer: 08011473.9
(22) Anmeldetag: 25.06.2008
(51) Int. Cl.: F01N 3/20, F02D 9/06, F02D 13/04, F16L 13/06

(54) **Selbstreinigendes Abgasnachbehandlungssystem**
Self-cleaning exhaust gas after treatment system
Système de traitement postérieur de gaz d'échappement autonettoyant

(30) Priorität: 18.07.2007 DE 102007033424
(43) Veröffentlichungstag der Anmeldung: 18.03.2009
(73) Patentinhaber: MAN Nutzfahrzeuge Aktiengesellschaft, 80995 München (DE)
(72) Erfinder: Döring, Andreas, 80339 München (DE); Sommermann, Andreas, 91560 Heilsbronn (DE)

(56) Entgegenhaltungen:
- EP-A1- 1 892 395
- US-A1- 2006 010 857

## Beschreibung

Gegenstand der Erfindung ist ein Abgasnachbehandlungssystem bei mit Luftüberschuss betriebenen Brennkraftmaschinen, wie Dieselmotoren und Ottomotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂+6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Je nach Ausführung der Katalysatoren, Platingehalt und Anwendungsfall weisen die Katalysatoren Anspringtemperaturen zwischen 180°C - 330°C auf. Als Anspringtemperatur bezeichnet man hierbei diejenige Temperatur, bei der 50% des Stickstoffmonoxids zu Stickstoffdioxid oxidiert wird.

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um Letzteres zu verhindern, wird häufig ein dem SCR-Katalysator nachgeordneter Ammoniak-Sperrkatalysator eingesetzt, der überschüssigen Ammoniak zu Stickstoff und Wasserdampf umsetzt. Besondere Probleme bereitet der sogenannte Kaltstart, bei dem die Abgasemissionen auch nach einem Start des kalten Motors und damit nicht betriebwarmem Nachbehandlungssystem eingehalten werden müssen.

Zur Minimierung der Feststoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A2 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist, während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren, das an Stelle eines Partikelabscheiders der vorstehend beschriebenen Art einen Partikelfilter einsetzt, ist der EP 0 341 832 A2 zu entnehmen. Die vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feststoffpartikel, Regenerationszyklen, wie sie aufwändig bei anderen Anordnungen durchgeführt werden müssen, entfallen dadurch.

2 NO₂ + C ⇒ 2NO+CO₂ (4)

NO₂ + C ⇒ NO+CO (5)

2 C + 2 NO₂ ⇒ N₂+2CO₂ (6)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feststoffpartikelemission erforderlich. Hierzu sind mit der DE 103 48 799 A1 und der EP 1 054 722 B1 bereits verschiedene Anordnungen und Verfahren bekannt geworden.

Als Reduktionsmittel für die SCR-Reaktion hat sich, wie bereits erwähnt, im Kraftwerksbereich Ammoniak bewährt, das allerdings auf Grund seiner Toxizität bei in Fahrzeugen betriebenen Brennkraftmaschinen durch ungefährliche ammoniakabspaltenden Verbindungen, wie Harnstoff oder Ammoniumformiat, in fester oder wässriger Form, ersetzt wird. Die Zersetzung dieser Stoffe und damit die Freisetzung von Ammoniak ist beim SCR-Verfahren ausschlaggebend für die Einsetzbarkeit des Verfahrens.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃+HNCO (7)

erfolgt zunächst die Thermolyse, d. h. die thermische Zersetzung von Harnstoff. Anschließend erfolgt nach

HNCO+H₂O ⇒ NH₃+CO₂ (8)

eine Hydrolyse, also die Zersetzung von Isocyansäure (HNCO) in Ammoniak (NH₃) und Kohlendioxid (CO₂).

Da das Reduktionsmittel bei der Verwendung der heute marktüblichen, mit AdBlue bezeichneten 33%igen wässrigen Harnstofflösung, in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste Cyanursäure durch Trimerisierung der nach (7) gebildeten Isocyansäure gemäß

3HNCO ^{<350°C →}_{←>350°C} (HNCO)₃ (9)

und in Folge davon Ammelid,

Cyanursäure + NH₃ ⇒ Ammelid+H₂O (10)

Ammelin

Ammelid + NH₃ ⇒ Ammelin+H₂O (11)

und Melamin

Ammelin + NH₃ ⇒ Melamin+H₂O (12)

entstehen, die zur Verstopfung des nachfolgenden Abgastraktes führen. Abhilfe kann, wie in der erwähnten DE 40 38 054 ausgeführt, dadurch geschaffen werden, dass der mit dem Reduktionsmittel beladene Abgasstrom über einen Harnstoffzersetzungs- und Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators sind in der erwähnten Publikation ebenso beschrieben wie Aufbau und Funktion eines mit einem Hydrolysekatalysator ausgestatteten SCR-Katalysator-Systems. Als Aktivkomponenten für einen Harnstoffzersetzungs- und Hydrolysekatalysator kommen TiO₂ und/oder SiO₂ und/oder Al₂O₃ und/oder Zeolithe zum Einsatz. Um die Katalysatoren zu verkleinern, aber die Verweilzeit in den Katalysatoren konstant zu lassen, werden die Hydrolysekatalysatoren oft in einem Abgasteilstrom betrieben, der dem Hauptstrom entnommen wird, wie dies die EP 1052009 A1 zeigt. Besonders vorteilhaft ist es dabei, den Abgasteilstrom möglichst motornah zu entnehmen, um den Hydrolysekatalysator auf einem hohen Temperaturniveau betreiben zu können. Bei abgasaufgeladenen Brennkraftmaschinen ist es vorteilhaft, den Abgasteilstrom bereits vor dem Turbolader zu entnehmen und ihn stromab des Turboladers wieder zurückzuführen entsprechende Anordnungen sind in der DE 10206028 A1, der DE 19855384 A1 und der DE 19960976 A1 beschrieben.

Wird kein Hydrolysekatalysator verwendet oder ist dieser überlastet, indem er z.B. bei zu geringen Temperaturen und/oder hohen Reduktionsmitteldosiermengen betrieben wird, so gelingt keine quantitative Hydrolyse der Isocyansäure. Besonders problematisch ist dies bei der Verwendung von wässriger Harnstofflösung, da durch die Verdampfung des Wassers dem Abgas zusätzlich Wärme entzogen und diese somit abgekühlt wird. In einem solchen Fall bilden sich, wie vorstehend ausgeführt, thermisch sehr stabile Nebenprodukte wie Cyanursäure, Ammelid, Ammelin und Melamin. Diese Feststoffe lagern sich auf den Hydrolysekatalysatoren, den Harnstoffeinspritzdüsen und den Rohrleitungen ab, was bis zur kompletten Blockierung des Abgasstromes bzw. dem Ausfall des SCR-Systems führen kann. Die Zersetzung dieser Stoffe gelingt erst oberhalb von 450°C -500°C vollständig. Allerdings liegen die Abgastemperaturen moderner Dieselmotoren auf Grund ihrer hohen Wirkungsgrade üblicherweise unterhalb von 400°C. Dies hat zur Folge, dass eventuell gebildete Ablagerungen ohne zusätzliche Maßnamen nicht wieder entfernt werden können.

Eine Möglichkeit die Abgastemperatur auf ein entsprechendes Niveau anzuheben, besteht, wie in der DE 3605255 A1 beschrieben, darin, Motorparameter, wie beispielsweise den Spritzbeginn zu verstellen oder das Kraftstoff-/Luftverhältnisses abzusenken.

Darüber hinaus kann der Anteil von unverbrannten Kohlenwasserstoffen und/oder Kohlenmonoxid im Abgas erhöht werden, um diese Stoffe dann, gegebenenfalls katalytisch, zu oxidieren und damit die Abgastemperatur zu erhöhen. Entsprechende Anordnungen und Verfahren sind der DE 102005023398 A1, der DE 10323245 Alund der DE 60210528 T2 zu entnehmen.

Neben dem Anheben des Temperaturniveaus durch exotherme Reaktionen ist es aus der DE 19960976 A1 weiter bekannt, den Hydrolysekatalysator zur Temperaturanhebung elektrisch zu beheizen.

Allen vorstehenden Varianten zur Anhebung der Temperatur ist gemein, dass sie zu einer Erhöhung des Kraftstoffverbrauchs und damit einer Verschlechterung des Wirkungsgrades der Brennkraftmaschine führen.

In Lastkraftwagen und Bussen ist der Einsatz sogenannter Motorbremsen weit verbreitet. Hierbei wird der Motor als Kompressor betrieben und das Fahrzeug, zusätzlich zu den Reibungs- und Strömungsverlusten des Antriebsstrangs im reinen Schubbetrieb, durch Umwandlung der vom Motor geleisteten Kompressionsarbeit in Wärme abgebremst. Man unterscheidet dabei meist zwischen Motorstau- und Dekompressionsbremsen.

Bei den Motorstaubremsen wird, wie z. B. in der DE 966212 B beschreiben, die Zuführung des Kraftstoffs unterbrochen und im Abgastrakt eine Drosselvorrichtung, meist eine Klappe oder ein Schieber, geschlossen, wodurch vom Motor mehr Kompressionsarbeit geleistet werden muss. Durch die Kompression kommt es zu einem starken Temperaturanstieg von über 500°C. Die kinetische Energie des Fahrzeugs wird somit in Wärme umgewandelt und das Fahrzeug dadurch verlangsamt.

Um ein Abwürgen des Motors zu vermeiden, aber dennoch die maximale Bremsleistung zu erreichen, kann, wie dies in der DE 3430028 A1, der DE 1177502 A, der DE 4497835 T1 und der DE 1124375 A näher ausgeführt ist, die Ansteuerung des Drosselorgans und/oder eines Entlüftungsventils vom Abgasgegendruck und/oder Motor- und/oder Fahrzeugparametern abhängig gemacht werden. Allerdings ist dies oft schwierig, da auf Grund der relativ großen Querschnitte der Drosselorgane nur eine sehr grobe Steuerung bzw. Regelung möglich ist. Abhilfe für dieses Problem schafft eine Anordnung die in der DE 1811627 U beschrieben ist: Die Abgasanlage wird demnach in einen größeren und einen kleineren Abgasstrang aufgeteilt. In beiden Strängen ist eine Drosseleinrichtung vorgesehen, die beide getrennt voneinander angesteuert werden können. Die feine Reglung kann somit über eine kleinere und damit genauere Drosselvorrichtung im kleineren Abgasstrang erfolgen, während im Hauptabgasstrom die grobe Steuerung bzw. Regelung dargestellt werden kann.

Eine weitere Möglichkeit einer Motorbremse stellt die sogenannte Dekompressionsbremse dar, wie sie in der CH 429298 A beschreiben ist. Auch hier wird die vom Motor geleistete Verdichtungsarbeit zum Abbremsen des Fahrzeugs verwendet. Anders als bei den Motorstaubremsen wird hier allerdings zum Ende des Verdichtungstaktes des Motors ein separates Ventil oder aber ein Auslassventil geöffnet und das im Zylinder befindliche komprimierte Gas entspannt. Da im darauffolgenden Expansionstakt keine Energie mehr an die Kurbelwelle abgegeben werden kann, liegt die Bremsleistung der Dekompressionsbremsen über denen der Staudruckbremsen.

Die beste Bremswirkung wird durch eine Kombination von Motorstau- und Dekompressionsbremse erreicht, solche Anordnungen sind der DE 3904497 C1 und der EP 0593908 A1 zu entnehmen.

Weiter ist aus der US 2006/010857 A1 ein Abgasnachbehandlungssystem zum Entfernen von Stickoxiden aus dem Abgas einer in einem Fahrzeug verbauten Brennkraftmaschine bekannt, wobei das Entfernen der Stickoxide mit Hilfe der selektiven katalytischen Reduktion derart erfolgt, dass ein Ammoniak abspaltendes Reduktionsmittel stromauf zu einem SCR-Katalysator dem Abgas beigegeben wird und der SCR-Katalysator die im Abgas enthaltenen Stickoxide mit Hilfe des aus dem Reduktionsmittel freigesetzten Ammoniaks zumindest teilweise in Stickstoff und Wasserdampf überführt. Dabei ist vorgesehen, dass vom Abgasstrom wenigstens ein kleinerer Abgasteilstrom abzweigt, die Zumessung des Reduktionsmittels in den Abgasteilstrom erfolgt und der Abgasteilstrom stromab zur Zuführung des Reduktionsmittels wieder in den Abgasstrom mündet.

Ausgehend vom vorstehend beschriebenen Stand der Technik ist es Aufgabe der Erfmdung, unter Vermeidung der Nachteile bekannter Anordnungen ein selbstreinigend ausgebildetes Abgasnachbehandlungssystem zur selektiven katalytischen Reduktion von Stickoxiden aus dem Abgas einer Brennkraftmaschine anzugeben, wobei Ablagerungen im Abgasnachbehandlungssystem, wie insbesondere Cyanursäure, Ammelid, Ammelin und Melamin selbständig entfernt werden, die selektive katalytische Reduktion mittels eines in das Abgas einer Brennkraftmaschine zugegebenen, ammoniakabspaltenden Reduktionsmittels in einem SCR-Katalysator erfolgt und die mit Luftüberschuss betriebene Brennkraftmaschine in einem Fahrzeug verbaut ist.

Gelöst wir die Aufgabe durch eine Anordnung mit den Merkmalen des Anspruches 1, vorteilhafte Weiterbildungen des Abgasnachbehandlungssystems sind in den abhängigen Ansprüchen gekennzeichnet.

Bei der Lösung wird von einem bekannten Abgasnachbehandlungssystem zur Stickoxidreduzierung bei mit Luftüberschuss betriebenen Brennkraftmaschinen ausgegangen, wobei die Stickoxidreduzierung mittels eines SCR-Katalysators erfolgt. Bei solchen Systemen ist im Abgasstrom der Brennkraftmaschine ein Oxidationskatalysator angeordnet, der zumindest einen Teil des im Abgasstrom enthaltenen Stickstoffinonoxids in Stickstoffdioxid überführt. Aus einem Vorratsbehälter für ein Ammoniak abspaltendes Reduktionsmittel erfolgt mittels einer Zumesseinrichtung für das Reduktionsmittel das Einbringen des Reduktionsmittels in das Abgas, wobei die Zumessung des Reduktionsmittels parallel zum Oxidationskatalysator in einen vor dem Oxidationskatalysator vom Abgasstrom abgezweigten und nach dem Oxidationskatalysator in den Abgasstrom rückgeführten Abgasteilstrom erfolgt.

Bei derartigen Systemen kommt es, wie bereits ausgeführt, bei bestimmten Betriebsbedingungen der Brennkraftmaschine zur Bildung und Ablagerungen von insbesondere Cyanursäure, Ammelid, Ammelin und Melamin, die aufgrund der heute üblichen sehr niedrigen Abgastemperaturen ohne zusätzliche Maßnahmen nicht mehr entfernt werden können.

Es wurde nun gefunden, dass eine thermische Entfernung derartiger Ablagerungen bei in Fahrzeugen betriebenen Brennkraftmaschinen, mit Hilfe einer Motorbremse erreichbar ist, ohne dass zusätzliche kraftstoffzehrende Energiequellen eingesetzt werden müssen. Möglich wird dies dadurch, dass die kinetische Energie des Fahrzeugs im nicht befeuerten Motorbremsbetrieb durch die als Kompressor arbeitende Brennkraftmaschine mittels Kompressionsarbeit in Wärme umgesetzt wir, derart, dass die Brennkraftmaschine die angesaugte Luft verdichtet, dabei aufheizt und die so aufgeheizte Luft in den Abgastrakt drückt. Befindet sich nun stromab zum Abzweig eines Abgasteilstroms vom Abgasstrom und stromauf zur Rückführstelle des Abgasteilstroms in den Abgasstrom ein Sperrorgan, mit dem der Abgasstrom parallel zum Abgasteilstrom zumindest teilweise absperrbar ist, wird das im Motorbremsbetrieb aufgeheizte Abgas in den Abgasteilstrom geleitet und löst dort etwaige Ablagerungen von Cyanursäure, Ammelid, Ammelin und Melamin, die durch das eindosieren des Reduktionsmittels in den Abgasteilstrom entstanden sind, thermisch auf.

Das Sperrorgan ist vorteilhaft mittels eines ersten Antriebs antreibbar, wobei der erste Antrieb über eine elektronische Steuereinheit steuer- oder regelbar ist.

Handelt es sich bei der Motorbremse um eine Motorstaubremse kann es zur Dosierung der Motorbremswirkung vorteilhaft sein, im Abgasteilstrom ein Steuerorgan z.B. in Form einer Abgasklappe oder eines Schiebers anzuordnen, mittels dem der Abgasteilstrom ganz oder teilweise absperrbar ist. Ein solches Steuerorgan wird mittels eines zweiten Antriebs angetrieben, wobei der zweite Antrieb ebenfalls über eine elektronische Steuereinheit steuer- oder regelbar ist.

Zur thermischen Beseitigung der Ablagerungen im Abgasnachbehandlungssystem lässt sich gleichermaßen gut und damit vorteilhaft eine Motorstaubremse und/oder eine Dekompressionsbremse einsetzen.

Weiter ist es zur Verbesserung der Gesamtumsetzungsrate von Stickstoffmonoxid und Stickstoffdioxid in Stickstoff und Wasser vorteilhaft, stromab zum Sperrorgan und stromauf zur Rückführstelle des Abgasteilstroms in dem Abgasstrom einen Oxidationskatalysator anzuordnen, der zumindest einen Teil des im Abgas enthaltenen Stickstoffmonoxids mittels des im Abgas enthaltenen Restsauerstoffes in reaktionsfreudigeres Stickstoffdioxid überführt.

Zur Verbesserung der Umsetzungsrate des Reduktionsmittels in Ammoniak ist es weiter vorteilhaft, stromab zur Zuführstelle des Reduktionsmittels in den Abgasteilstrom und stromauf zur Rückführstelle des Abgasteilstroms in den Abgasstrom einen Hydrolysekatalysator anzuordnen.

Um zu verhindern, dass bei einer Strömungsrichtungsumkehr im Abgassystem aus dem Abgasteilstrom Reduktionsmittel, Ammoniak oder Zwischenprodukte der Hydrolyse in Richtung Brennkraftmaschine zurück strömen, ist es von Vorteil, stromab zum Abzweig des Abgasteilstroms vom Abgasstrom und stromauf zur Zuführstelle des Reduktionsmittels im Abgasteilstrom einen weiteren Oxidationskatalysator anzuordnen, der diese aggressiven Anteile oxidiert. Gleichzeitig wird mit einem solchen Oxidationskondensator im Abgasteilstrom erreicht, dass bei normaler Abgasstromrichtung einerseits nicht verbrannte, im Abgas enthaltene Kohlenwasserstoff in einer exothermen Reaktion oxidiert werden, wodurch sich der Abgasstrom zusätzlich aufheizt und dass auch im Abgasteilstrom ein Teil des Stickstoffmonoxids in das reaktionsfreudigere Stickstoffdioxid umgesetzt wird, was wiederum den erzielbaren Gesamtumsatz des Abgasnachbehandlungssystems in vorteilhafter Weise positiv beeinflusst.

Um zu verhindern, dass durch den weiteren Oxidationskatalysator im Abgasteilstrom bei Strömungsrichtungsumkehr problematische Oxidationsprodukte von Ammoniak, wie z.B. Lachgas entstehen, ist es vorteilhaft, stromab zum Abzweig des Abgasteilstroms vom Abgasstrom und stromauf zur Zuführstelle des Reduktionsmittels im Abgasteilstrom einen weiteren SCR-Katalysator anzuordnen, der zurückströmenden Ammoniak mit Hilfe der im Abgas enthaltenen Stickoxide und Restsauerstoff selektiv in Stickstoff überführt.

Soll mit dem Abgasnachbehandlungssystem auch eine Partikelreduzierung durchgeführt werden, ist es vorteilhaft, ein Partikelabscheider oder Partikelfilter stromauf oder stromab des SCR-Katalysators anzuordnen, wodurch sowohl der Abgasstrom als auch der Abgasteilstrom vom Partikelabscheider oder Partikelfilter erfasst wird. Aus thermischen Gründen ist es dabei besonders vorteilhaft, den Partikelabscheider oder Partikelfilter stromab zur Rückführstelle des Abgasteilstroms in den Abgasstrom und stromauf zum SCR-Katalysator anzuordnen, weil so höhere Temperaturen zur Oxidation der Rußpartikel gegeben sind.

Handelt es sich bei der Brennkraftmaschine um eine mittels Turbolader aufgeladene Brennkraftmaschine, so ist es vorteilhaft, den Turbolader oder die Turbolader, wenn es sich um eine mehrstufige Aufladung handelt, unmittelbar stromauf oder stromab zum Sperrorgan anzuordnen. Besonders vorteilhaft für die Optimierung der Bremswirkung bei Kombination mit einer Motorstaubremse ist die Anordnung des Turboladers oder der Turbolader unmittelbar stromab zum Sperrorgan, weil so das kompressible Gasvolumen vor dem Sperrorgan minimiert wird.

Um beim erfindungsgemäßen Abgasnachbehandlungssystem Ammoniakschlupf zu verhindern, ist es von Vorteil, dem SCR-Katalysator einen Ammoniaksperrkatalysator nachzuordnen der im SCR-Katalysator nicht verbrauchten überschüssigen Ammoniak in Stickstoff überführt.

Zur Minimierung des Verbrauches an Reduktionsmittel ist es weiter von Vorteil, wenn während des Motorbremsbetriebs die Zuführung des Reduktionsmittels verringert oder ganz eingestellt wird, weil in dieser Betriebsart einerseits keine Stickoxide anfallen und andererseits das zuführen des Reduktionsmittels, wenn es sich dabei um wässrige Harnstofflösung handelt, zu einer Abkühlung der nachgeordneten Komponenten führen würde, was der thermischen Auflösung von Ablagerungen in diesem Bereich entgegen läuft.

Um eine zusätzliche Temperaturerhöhung im Abgasteilstrom während des Motorbremsbetriebes zu realisieren, ist die Zuführung einer vorgebbaren Kraftstoffmenge in wenigstens einen Brennraum der Brennkraftmaschine hilfreich und damit vorteilhaft, wobei diese Zuführung so erfolgt, dass diese Kraftstoffmenge größtenteils unverbrannt in den Abgastrakt gelangt und wobei im Abgasteilstrom stromab zum Abzweig des Abgasteilstroms und stromauf zur Zuführstelle des Reduktionsmittels in dem Abgasteilstrom ein Oxidationskatalysator angeordnet ist, der den Kraftstoff in einer exothermen Reaktion oxidiert.

Die Katalysatoren zur Reduktion von Stickoxiden mit Hilfe von Ammoniak enthalten als Aktivkomponente vorteilhaft Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe.

Für die Oxidationskatalysatoren sind vorteilhaft Platin und/oder Palladium und/oder Rhodium und/oder deren Oxide und/oder Zeolithe als Aktivmaterialien einsetzbar.

Für den Katalysator zur Zersetzung des Harnstoffs sind Materialien vorteilhaft einsetzbar, die als Aktivkomponente Titan und/oder Silizium und/oder Vanadium und/oder Wolfram und/oder deren Oxide und/oder Zeolithe enthalten.

Nachfolgend wird die Erfindung mit Hilfe der Zeichnungen anhand einiger Beispiele näher erläutert, es zeigen:
- Fig. 1: Ein Abgasnachbehandlungssystem mit Teilstromhydrolyse und integrierter Motorstaubremse
- Fig. 2: Anordnung nach Fig. 1 mit einem Hydrolysekatalysator
- Fig. 3: Anordnung nach Fig. 2 mit Rückströmsicherung im Teilstrom
- Fig. 4: Ein Abgasnachbehandlungssystem mit Teilstromhydrolyse und Rückströmsicherung im Teilstrom für Brennkraftmaschinen mit Turbolader

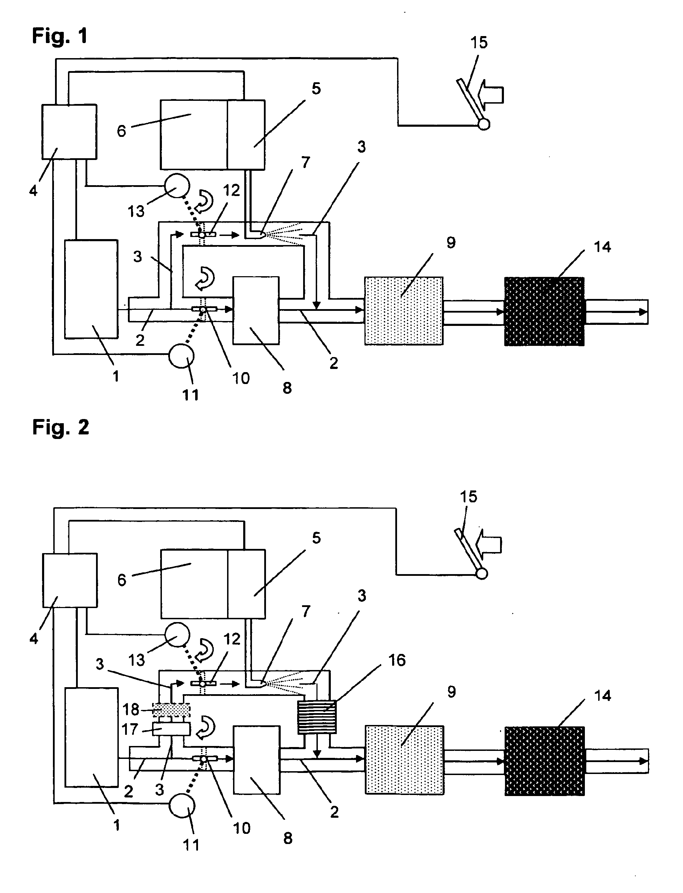

Ein in einem Nutzfahrzeug betriebenes Abgasnachbehandlungssystem mit Teilstromhydrolyse und integrierter Motorstaubremse ist in Fig. 1 schematisch dargestellt. Die von einer Brennkraftmaschine 1 durch die Verbrennungsvorgänge erzeugten Abgase - in allen Figuren durch Pfeile symbolisiert - gelangen zunächst als Abgasstrom 2 in den Abgastrakt. Dort zweigt vom Abgasstrom 2 ein Abgasteilstrom 3 ab, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Die Zumessung des Reduktionsmittels erfolgt durch eine in Abhängigkeit von Betriebsparametern der Brennkraftmaschine 1 mittels einer elektronischen Steuereinheit 4 gesteuerten Zumesseinrichtung 5, die die wässrige Harnstofflösung aus einem Vorratsbehälter 6 entnimmt und über eine Düse 7, je nach Betriebszustand der Brennkraftmaschine 1, in vorgegebenen Mengen in den Abgasteilstrom 3 einspritzt. Im heißen Abgas muss nun, im Falle einer wässrigen Harnstofflösung, der Wasseranteil verdampfen und der Harnstoff muss nach den vorstehenden, mit (7) und (8) bezeichneten Reaktionen in Ammoniak (NH₃) und Kohlendioxid (CO₂) übergeführt werden. Dies gelingt bei zu niedrigen Abgastemperaturen (< 350°C) nur unvollständig, statt dessen entstehen nach (9) Cyanursäure und in geringerem Maße Ammelid, Ammelin und Melamin.

Parallel zur Zuführstelle des Reduktionsmittels ist ein Oxidationskatalysator 8 im Abgasstrom 2 angeordnet, dessen Aufgabe darin besteht, nach der vorstehend mit (2) bezeichneten Reaktion einen Teil des im Abgas enthaltenen Stickstoffinonoxids mittels des im Abgas vorhandenen überschüssigen Sauerstoffes zu Stickstoffdioxid aufzuoxidieren. Stromab zum Oxidationskatalysator 8 mündet der mit dem Reduktionsmittel beladene Abgasteilstrom 3 wieder in den Abgasstrom 2.

Die eigentliche selektive katalytische Reduktion der Stickoxide erfolgt stromab zur Einmündung des Abgasteilstroms 3 in den Abgasstrom 2, mittels eines SCR-Katalysators 9 der einen möglichst großen Anteil der im Abgas vorhandenen Stickoxide (NOₓ) bei gleichzeitiger hoher Selektivität der Reduktion in Stickstoff und Wasserdampf überführen soll, ohne dass überschüssiger Ammoniak (NH₃) im Abgasstrom verbleibt. Gelingt dies aufgrund einer Fehldosierung des Reduktionsmittels, z.B. bei hochdynamischen Laständerungen, nicht vollständig, verbleibt also stromab des SCR-Katalysators 9 überschüssiger Ammoniak im Abgasstrom, so wird dieser durch einen dem SCR-Katalysator 9 nachgeordneten NH₃-Oxidationskatalysator 14 in Stickstoff und Wasserdampf übergeführt.

Zur Realisierung einer Motorbremse, im vorliegenden Beispiel einer Motorstaubremse, ist im Abgasstrom 2, stromauf zum Oxidationskatalysator 8 und stromab zum Abzweig des Abgasteilstroms 3, eine erste Abgasklappe 10 und im Abgasteilstrom 3, stromauf zur Zuführstelle des Reduktionsmittels und stromab zum Abzweig des Abgasteilstroms 3, eine Steuerklappe 12 angeordnet. Zum Schließen bzw. Öffnen der ersten Abgasklappe 10 ist ein erster Antrieb 11 vorgesehen, der auf diese wirkt und von der elektronischen Steuereinheit 4 angesteuert wird. Entsprechend ist zum Schließen der Steuerklappe 12 ein zweiter Antrieb 13 vorgesehen, der seinerseits auf diese wirkt und ebenfalls von der elektronischen Steuereinheit 4 angesteuert wird. Bei dem ersten Antrieb 11 und dem zweiten Antrieb 13 kann es sich um einen elektrischen, hydraulischen oder pneumatischen Antrieb handeln, derartige Antriebe sind im Zusammenhang mit Abgasklappen bzw. Steuerklappen bekannt. Wird vom Fahrer des Fahrzeugs, z.B. durch Betätigen eines mit der elektronischen Steuereinheit 4 verbundenen Bremspedals 15, eine Bremsleistung angefordert, erkennt dies die elektronische Steuereinheit 4 und verteilt bei heute üblichen Nutzfahrzeugen die angeforderte Bremsleistung vollautomatisch auf die Motorbremse die Betriebsbremse (nicht dargestellt) und wenn vorhanden den Retarder (nicht dargestellt). Resultiert aus dieser Verteilung der Bremsleistung eine Anforderung der Motorbremse, wird die Abgasklappe 10 über den auf diese wirkenden ersten Antrieb 11, der seinerseits von der elektronischen Steuereinheit 4 angesteuerten wird, geschlossen, gleichzeitig unterbricht die elektronische Steuereinheit 4 einerseits die Zuführung des Reduktionsmittel durch entsprechende Ansteuerung der Zumesseinrichtung 5 und andererseits die Kraftstoffzufuhr über die Einspritzventile (nicht dargestellt) der Brennkraftmaschine 1. Zur Regelung der Leistung der durch die Abgasklappe 10 gebildeten Motorstaubremse dient die im Abgasteilstrom 3 angeordnete Steuerklappe 12, die über den zweiten Antrieb 13, der seinerseits von der elektronischen Steuereinheit 4 angesteuert wird, zu unterschiedlichen Graden geschlossen werden kann. Wie weit die Steuerklappe 12 geschlossen wir, hängt dabei von der benötigten Bremsleistung ab, weil dieser sicherheitsrelevante Aspekt Vorrang genießen muss. Natürlich kann auch der Druck stromauf der Steuerklappe zu Regelung herangezogen werden, ebenso die Abgastemperatur.

Ist der Querschnitt des Abgasteilstroms 3 für den angestrebten Regelbereich der Motorbremse zu gering, kann selbstverständlich eine Grobregelung durch die Abgasklappe 10 erfolgen, während die Feinregelung die Steuerklappe 12 übernimmt. Bei sehr geringem Querschnitt des Abgasteilstroms ist es auch denkbar, dass die Steuerklappe 12 entfällt und die Regelung ausschließlich durch die Abgasklappe 10 erfolgt.

In Anbetracht der ständig wechselnden Betriebsbedingungen einer in einem Kraftfahrzeug betriebenen Brennkraftmaschine ist offensichtlich, dass es zu Betriebszuständen kommt, in denen die Abgastemperatur unter die für eine quantitative Hydrolyse der Isocyansäure erforderlichen Mindesttemperatur fällt, sich also die angesprochenen thermisch sehr stabilen Feststoffe Cyanursäure, Ammelid, Ammelin und Melamin an der Harnstoffeinspritzdüsen und den Rohrleitungen ablagern. Diese Ablagerungen können wegen des niedrigen Abgastemperaturniveaus moderner Brennkraftmaschinen, das üblicherweise nicht über 400 °C ansteigt, im normalen Betrieb nicht mehr entfernt werden und würden ohne Gegenmaßnahmen durch kontinuierliche Ansammlung zur kompletten Blockierung des Abgasstromes bzw. dem Ausfall des SCR-Systems führen. Um das Temperaturniveau im verstopfungsgefährdeten Abgasteilstrom 3 zumindest kurzfristig auf über 500 °C anzuheben, wird bei Motorbremsvorgängen bei denen nicht die volle Motorbremsleistung erforderlich ist, durch die geschlossene Abgasklappe 10 bei gleichzeitig unterbrochener Zuführung des Reduktionsmittel, unterbrochener Kraftstoffeinspritzung und ganz oder teilweise geöffneten Steuerklappe 12, das durch die Kompressionsarbeit der Brennkraftmaschine verdichtete Abgas jeweils im Ausschubtakt in den Abgasteilstrom 3 gedrückt, so dass die Temperatur des Abgasteilstroms 3 stark ansteigt und eine Höhe von 500°C bis 550°C erreicht. Ablagerungen von Cyanursäure, Ammelid, Ammelin und Melamin werden durch diese hohen Temperaturen thermisch entfernt.

Da bei normalem Betreib eines Fahrzeugs über die Zeit gesehen nicht immer die maximale Bremsleistung angefordert wird, verbleibt bei wirksamer Motorbremse und teilweise oder ganz geöffneter Steuerklappe 12 genügend Durchsatz von heißem Abgas durch den Abgasteilstrom 3 um Ablagerungen sicher zu entfernen bevor es zu Verstopfungserscheinungen kommen kann.

Selbstverständlich lässt sich die vorstehend beschriebene Anordnung mit einer als Dekompressionsbremse ausgeführten Motorbremse ebenfalls realisieren, da bei einer Dekompressionsbremse die im Verdichtungstakt geringfügig geöffneten Auslassventile oder die bei manchen Dekompressionsbremsen vorgesehenen gesonderten Ventile die verdichtete und damit aufgeheizte Luft stromauf der Abgasklappe 10 in den Abgastrakt entlassen. Durch die in Wärme umgesetzte Kompressionsarbeit der Brennkraftmaschine erreicht die in den Abgastrakt gelangende Luft ebenfalls Temperaturen von über 500°C, diese heiße Luft wird durch die geschlossene Abgasklappe 10 in den Abgasteilstrom geleitet und sorgt dafür, dass der Abgasteilstrom von eventuellen Ablagerungen befreit wird. In diesem Fall hat die Abgasklappe 10 keine Funktion für den Motorbremsvorgang sondern dient lediglich dazu, je nach dem Grad des Schließens der Abgasklappe 10, das Abgases ganz oder teilweise in den Angasteilstrom 3 umzuleiten. Eine Steuerklappe im Abgasteilstrom ist in diesem Falle nicht notwendig.

Wie bereits ausgeführt, lässt sich das Temperaturniveau für eine quantitative Hydrolyse der Isocyansäure dadurch absenken, dass der Zuführstelle für das Reduktionsmittel ein Hydrolysekatalysator nachgeordnet ist, ein solches Beispiel zeigt Fig. 2 in schematischer Darstellung. Die Anordnung nach Figur 2 unterscheidet sich von der nach Figur 1 lediglich dadurch, dass einerseits im Abgasteilstrom 3, stromab zur Zuführstelle für das Reduktionsmittel und stromauf zur Rückführung des Abgasteilstroms 3 in den Abgasstrom 2 ein Hydrolysekatalysator 16 angeordnet ist. Zum anderen weist das Beispiel nach Figur 2 im Abgasteilstrom 3, stromab zum Abzweig des Abgasteilstroms 3 vom Abgasstrom 2 und stromauf der Steuerklappe 12 einen weiteren Oxidationskatalysator 17 und optional stromab zu dem weiteren Oxidationskatalysator 17 einen weiteren SCR-Katalysator 18 auf. Diese vorgenannten zusätzlichen Bauteile verändern die Funktion der Anordnung gegenüber der in Figur 1 gezeigten nicht, was durch die Beibehaltung der Bezugszeichen deutlich gemacht ist. Um Wiederholungen zu vermeiden wird hinsichtlich der Anordnung der übrigen Bauteile und insbesondere der Beschreibung der Funktion auf die Beschreibung zu Figur 1 verwiesen. Die nachfolgende Beschreibung der Anordnung nach Figur 2 beschränkt sich deshalb nur auf die Funktion der hinzugekommenen Bauteile.

Die Anwendung eines der Eindüsstelle der wässrigen Harnstofflösung nachgeordneten Hydrolysekatalysators im Abgasteilstrom 3 führt, wie bereits an anderer Stelle ausgeführt, dazu, dass das Temperaturniveau, bei dem eine quantitative Umwandlung der wässrigen Harnstofflösung in Ammoniak erfolgt, auf ca. 160 °C gedrückt wird. Die Umsetzung der wässrigen Harnstofflösung wird dadurch zwar erheblich verbessert, dies ist aber für eine nicht vernachlässigbare Anzahl von Betriebszuständen immer noch nicht ausreichend, so werden diese notwendigen 160 °C Abgastemperatur z.B. beim Kaltstart oder nach langem Schubbetrieb, insbesondere bei niedrigen Außentemperaturen, nicht erreicht. Es kommt dadurch bei den angesprochenen niedrigen Abgastemperaturen zu Ablagerungen von Cyanursäure, Ammelid, Ammelin und Melamin insbesondere am Hydrolysekatalysator, weil zur Erreichung der gesetzlich geforderten Abgaswerte im Niedrigtemperaturbereich nicht auf ein Zuführen von Reduktionsmittel verzichtet werden kann. Die Beseitigung solcher Ablagerungen erfolgt wie in Verbindung mit Figur 1 beschrieben, indem die Abgastemperatur im Abgasteilstrom 3 durch die in Wärme umgesetzte Kompressionsarbeit auf über 550 °C gebracht wird. Der gesamte Vorgang der Beseitigung der Ablagerungen ist mit dem zur Figur 1 ausführlich beschrieben Vorgang identisch, so dass auf diese Passagen der Beschreibung verwiesen wird.

Die Anwendung eines Hydrolysekatalysators verbessert demnach zwar die quantitative Thermolyse bzw. Hydrolyse der wässrigen Harnstofflösung, beseitigt das Problem von Ablagerungen jedoch nicht. Auch in Verbindung mit einem Hydrolysekatalysator ist es demnach erforderlich, eine thermische Auflösung der Ablagerungen von Cyanursäure, Ammelid, Ammelin und Melamin durch eine Aufheizung des Abgasteilstroms 3 in den Motorbremsphasen zu bewerkstelligen.

Bei bestimmten Betriebszuständen der Brennkraftmaschine, hauptsächlich im Schwachlastbetrieb, im Schubbetrieb, in bestimmten Phasen des Motorbremsbetriebs, in Leerlaufphasen oder beim Abstellen des Motors kann eine Umkehr der Strömungsrichtung des Abgases eintreten. Um in solchen Fällen zu verhindern, dass Reduktionsmittel, aus dem Reduktionsmittel abgespaltener Ammoniak oder aus dem Reduktionsmittel gebildete Nebenprodukte, wie Isocyansäure usw., durch Rückströmungen und/oder Diffusion in Richtung Motorblock, mit den abgasberührten Teilen des Motors in Berührung kommen, ist, wie oben bereits ausgeführt, im Abgasteilstrom 3, stromauf zur Steuerklappe 12, ein weiterer Oxidationskatalysator 17 angeordnet. Dieser ist hinsichtlich seiner Aktivkomponente so ausgelegt, dass er zurückströmendes Reduktionsmittel, aus dem Reduktionsmittel abgespaltenen Ammoniak oder aus dem Reduktionsmittel gebildete Nebenprodukte oxidiert. Die Auswahl der Aktivkomponenten des Oxidationskatalysators ist dabei so getroffen, dass die Oxidation von Ammoniak möglichst selektiv abläuft. Als Aktivmaterialien für den Oxidationskatalysator 17 bieten sich Platin, Palladium, Iridium, deren Oxide, IrTiOₓ, V₂O₅ und Zeolithe an, bei der Auslegung ist zu beachten, dass ein hoher Platinanteil zwar für einen möglichst hohen Umsatz förderlich ist, aber die Selektivität der Reaktion negativ beeinflusst.

In Erweiterung der Funktion des Oxidationskatalysators 17 kann dieser so ausgebildet sein, dass er entlag der Strömungsrichtung des Abgases gesehen unterschiedliche Eigenschaften aufweist, derart, dass die der Zuführstelle für das Reduktionsmittel benachbarte Seite Ammoniak bevorzugt selektiv zu Stickstoff und Wasser oxidiert, während die gegenüberliegende Seite dagegen im Abgas mitgeführtes Kohlenmonoxid und/ oder Stickstoffmonoxid und/ oder mitgeführte Kohlenwasserstoffe umsatzoptimiert oxidiert. Dies lässt sich vorteilhaft dadurch erreichen, dass die der Zuführstelle für das Reduktionsmittel benachbarte Seite eine höhere Beladung mit Palladium und/ oder Iridium und/ oder Zeolithen aufweist, als die der Brennkraftmaschine zugewandte Seite. Der gleiche Effekt ist dadurch erreichbar, dass die der Zuführstelle für das Reduktionsmittel benachbarte Seite des Oxidationskatalysators eine niedrigere Beladung mit Platin und/ oder dessen Oxiden aufweist, als die der Brennkraftmaschine zugewandte Seite.

Bei der Oxidation von Ammoniak an dem stromauf zur Zuführstelle für das Reduktionsmittel angeordneten weiteren Oxidationskatalysator 17 ist angestrebt, dass die Reaktion selektiv erfolgt, also als Reaktionsprodukte Stickstoff und Wasser entstehen. Dies gelingt allerdings nicht immer, es kommt statt dessen oft zur Bildung von unerwünschten Reaktionsprodukten wie Lachgas (N₂O), Stickstoffmonoxid (NO) oder Stickstoffdioxid (NO₂). Für Abhilfe sorgt eine Anordnung bei der, wie bereits oben ausgeführt, stromab zum weiteren Oxidationskatalysator 17 und stromauf zur Steuerklappe 12, im Abgasteilstrom 3 ein weiterer SCR-Katalysator 18 angeordnet ist. Dieser führt eventuell zurückströmenden Ammoniak mit Hilfe von im Abgas enthaltenem Stickstoffmonoxid und Restsauerstoff nach Gleichung (1) bzw. mit Hilfe von Stickstoffmonoxid und Stickstoffdioxid nach Gleichung (3) hoch selektiv in Stickstoff und Wasserdampf über. Erst wenn die Stickoxide im Abgas aufgebraucht sind, erfolgt die Oxidation des Ammoniaks mit Hilfe des Oxidationskatalysators 17.

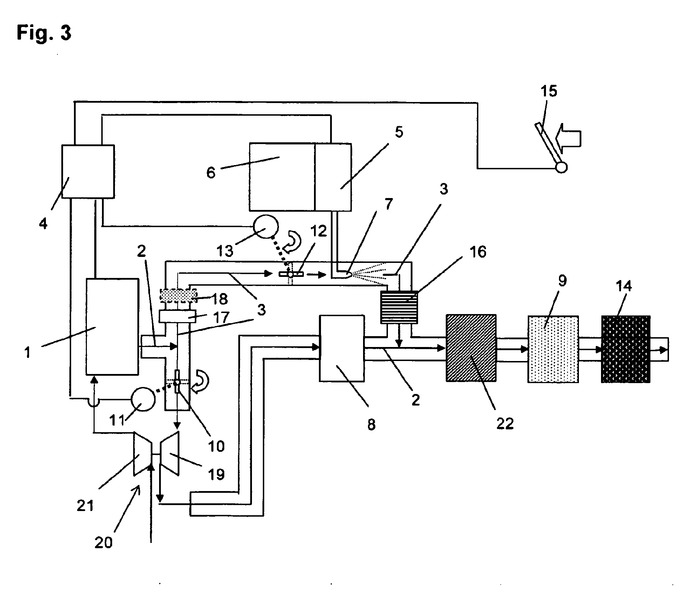

Bei heute in Fahrzeugen betriebenen Brennkraftmaschinen ist häufig eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, für die Hydrolyse des Reduktionsmittels ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 3. Die dort gezeigt Anordnung unterscheidet sich von der Anordnung nach Figur 2 dadurch, dass die Turbine 19 eines Turboladers 20 stromab zur Abgasklappe 12 und stromauf zum Oxidationskatalysator 8 angeordnet ist. Dadurch verzweigt der von der Brennkraftmaschine 1 kommende Abgasstrom 2 bereits vor der Turbine 19 des Abgasturboladers 20 in den Abgasteilstrom 3 während das restliche Abgas über die Turbine 19 geführt ist, über diese den Verdichter 21 antreibt und sodann dem nachgeordneten Oxidationskatalysator 8 zugeführt wird. Durch diese Anordnung der Turbine 19 wird erreicht, dass einerseits das Temperaturniveau im Abgasteilstrom 3' hoch bleibt, weil keine Abkühlung durch die Turbine 19 erfolgt, andererseits liegt die Abgasklappe 10 nahe an den Brennkammern (nicht dargestellt) der Brennkraftmaschine 1, so dass das kompressible Gasvolumen zwischen Brennkammern und Abgasklappe klein bleibt. Dies ist deshalb wichtig, weil ein großes Gasvolumen, wegen seiner Komprimierbarkeit, im Falle einer Motorstaubremse die Bremsleistung negativ beeinflusst.

In Abweichung zum Beispiel nach Figur 3 kann die Abgasklappe prinzipiell auch stromab zum Turbolader angeordnet sein, insbesondere dann, wenn die Motorbremse eine Dekompressionsbremse ist und damit das kompressible Gasvolumen zwischen Brennkraftmaschine und Absperrklappe keine Rolle spielt.

Die Hydrolyse des Reduktionsmittels erfolgt auch bei diesem Beispiel im Abgasteilstrom 3, dazu wird mit einer Dosiereinrichtung bestehend aus Vorratsbehälter 6, Zumesseinrichtung 5 und Düse 7 das Reduktionsmittel in Abhängigkeit von Betriebsparametern der Brennkraftmaschine 1 in den Abgasteilstrom 3 zugeführt. Durch die im Abgasteilstrom 3 herrschende relativ hohe Abgastemperatur kann der der Zuführstelle nachgeordneten Hydrolysekatalysator 16 in der Mehrzähl der vorkommenden Betriebszustände ohne die Bildung problematischer Reaktionsprodukte wie Cyanursäure, Ammoniak aus dem Reduktionsmittel abspalten. Wie bereits ausgeführt gelingt das jedoch nicht immer, da es auch zu Betriebszuständen kommt in denen die Abgastemperatur unter die für eine quantitative Hydrolyse der Isocyansäure erforderlichen Mindesttemperatur fällt, sich also die angesprochenen thermisch sehr stabilen Feststoffe Cyanursäure, Ammelid, Ammelin und Melamin an der Harnstoffeinspritzdüsen, den Rohrleitungen und dem Hydrolysekatalysator ablagern. Abhilfe wird auch hier dadurch geschaffen, dass in Motorbremsphasen eine Aufheizung des Abgasteilstroms 3 auf Temperaturen über 500 C° erfolgt und so die gebildeten Ablagerungen thermisch entfernt werden. Dies geschieht auch im Beispiel nach Figur 3 dadurch, dass bei Motorbremsvorgängen das durch die Kompressionsarbeit der Brennkraftmaschine 1 aufgeheizte Abgas mittels der Abgasklappe 10 in den Abgasteilstrom 3 geleitet wird.

Die Funktion der Motorbremse ist auch im Beispiel nach Figur 3 identisch zu der in Verbindung mit Figur 1 beschriebenen Motorbremse, was auch durch die in Figur 3 beibehaltenen Bezugszeichen zum Ausdruck kommt. Um Wiederholungen zu vermeiden wird deshalb auf die einschlägigen Passagen der Beschreibung zu Figur 1 verwiesen.

Wie in Verbindung mit dem Beispiel nach Figur 1 beschrieben, lässt sich auch in diesem Fall die vorstehend beschriebene Anordnung mit einer als Dekompressionsbremse ausgeführten Motorbremse realisieren. Durch die mittels der Dekompressionsbremse in Wärme umgesetzte Kompressionsarbeit der Brennkraftmaschine erreicht die in den Abgastrakt gelangende Luft ebenfalls Temperaturen von über 500°C, diese heiße Luft wird durch die geschlossene Abgasklappe 10 in den Abgasteilstrom 3 geleitet und sorgt dafür, dass der Abgasteilstrom von eventuellen Ablagerungen befreit wird. In diesem Fall hat die Abgasklappe 10 keine Funktion für den Motorbremsvorgang sondern dient lediglich dazu, je nach dem Grad des Schließens der Abgasklappe 10, das Abgas ganz oder teilweise in den Angasteilstrom 3 umzuleiten. Eine Steuerklappe im Abgasteilstrom 3 ist in diesem Falle ebenfalls nicht notwendig.

Zur weiteren Anhebung der Abgastemperatur kann im Expansionstakt oder im Ausschubtakt eine geringe Kraftstoffmenge in den Brennraum eingespritzt werden die nicht verbrennt, sondern mit den heißen Gasen in den Abgasteilstrom 3 gedrückt wird. Befindet sich, wie in den Beispielen nach den Figuren 2 und 3 beschrieben ein Oxidationskatalysator 17 im Abgasteilstrom, führt der unverbrannte Kraftstoff dort zu einer exothermen Oxidationsreaktion, die den Abgasstrom durch den Abgasteilstrom zusätzlich aufheizt.

Selbstverständlich lassen sich die vorstehend beschriebenen Anordnungen nach den Figuren 1 bis 3 auch mit einem Partikelabscheider oder einem Partikelfilter kombinieren, wie dies explizit im Beispiel nach Figur 3 gezeigt ist. Dort befindet sich stromab zur Zusammenführung von Abgasteilstrom 3 und Abgasstrom 2 und stromauf zum SCR-Katalysator 9 ein Partikelabscheider 22 im Abgasstrom, der die im Abgas befindlichen Rußpartikel anlagert. Die Beseitigung der angelagerten Rußpartikel erfolgt kontinuierlich mit Hilfe des in den Oxidationskatalysatoren 8 und 17 nach (2) aus NO und dem im Abgas enthaltenen Restsauerstoff erzeugten NO₂, das die Rußpartikel nach den Reaktionen (4), (5) und (6) zu CO bzw. CO₂ oxidiert. Die Anordnung des Partikelabscheiders oder Partikelfilters kann auch an anderer als der vorstehend beschriebenen Stelle, sowohl stromauf als auch stromab zum SCR-Katalysator erfolgen.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Selbstreinigendes Abgasnachbehandlungssystem zum Entfernen von Stickoxiden aus dem Abgas einer in einem Fahrzeug verbauten, Brennkraftmaschine, wobei das Entfernen der Stickoxide mit Hilfe der selektiven katalytischen Reduktion derart erfolgt, dass ein Ammoniak abspaltendes Reduktionsmittel stromauf zu einem SCR-Katalysator dem Abgas beigegeben wird und der SCR-Katalysator die im Abgas enthaltenen Stickoxide mit Hilfe des aus dem Reduktionsmittel freigesetzten Ammoniaks zumindest teilweise in Stickstoff und Wasserdampf überführt und wobei vom Abgasstrom (2) wenigstens ein kleinerer Abgasteilstrom (3) abzweigt, die Zumessung des Reduktionsmittels in den Abgasteilstrom (3) erfolgt und der Abgasteilstrom (3) stromab zur Zuführung des Reduktionsmittels wieder in den Abgasstrom (2) mündet,
**dadurch gekennzeichnet, dass** Ablagerungen, insbesondere Cyanursäure, Ammelid, Ammelin und Melamin aus dem Abgasnachbehandlungssystem thermisch entfernt werden, wobei
- die Brennkraftmaschine (1) mit einer Motorbremse ausgestattet ist, derart, dass die im nicht befeuerten Betrieb als Kompressor arbeitende Brennkraftmaschine (1) durch die kinetische Energie des Fahrzeugs angetrieben, die der Brennkraftmaschine (1) zugeführte Verbrennungsluft komprimiert, dabei aufheizt und in den Abgastrakt presst und das Fahrzeug durch diese Kompressionsarbeit abbremst,
- stromab zum Abzweig des Abgasteilstroms (3) vom Abgasstrom (2) und stromauf zur Rückführstelle des Abgasteilstroms (3) in den Abgasstrom (2) ein Sperrorgan (10) im Abgasstrom (2) angeordnet ist, mit dem der Abgasstrom (2) parallel zum Abgasteilstrom (3) zumindest teilweise absperrbar ist, derart, dass im Motorbremsbetrieb das durch die Kompressionsarbeit der Brennkraftmaschine (1) aufgeheizte Abgas in den Abgasteilstrom (3) gelangt und dort etwaige Ablagerungen von Cyanursäure, Ammelid, Ammelin und Melamin thermisch auflöst,
- stromab zur Rückführstelle des Abgasteilstroms (3) in den Abgasstrom (2) ein SCR-Katalysator (9) zur selektiven katalytischen Reduktion der Stickoxide im Abgas der Brennkraftmaschine (1) angeordnet ist.

2. Anordnung nach Anspruch 1, **dadurch gekennzeichnet, dass** das Sperrorgan (10) mittels eines ersten Antriebs (11) antreibbar ist, wobei der erste Antrieb (11) über eine elektronische Steuereinheit (4) steuerbar oder regelbar sein kann.

3. Anordnung nach Anspruch 1, **dadurch gekennzeichnet, dass** im Abgasteilstrom (3) ein Steuerorgan (12) angeordnet ist, mittels dem der Abgasteilstrom (3) ganz oder teilweise absperrbar ist.

4. Anordnung nach einem der vorhergehenden Ansprüche, **dadurch gekennzeichnet, dass** das Steuerorgan (12) mittels eines zweiten Antriebs (13) antreibbar ist, wobei der zweite Antrieb (13) über die elektronische Steuereinheit (4) steuerbar oder regelbar ist.

5. Anordnung nach Anspruch 1, **dadurch gekennzeichnet, dass** es sich bei der Motorbremse um eine Motorstaubremse und/oder um eine Dekompressionsbremse handelt und/oder das Fahrzeug durch Öffnen der Auslassventile, zu einem Zeitpunkt, der sich vom befeuerten Betrieb unterscheidet, abgebremst wird.

6. Anordnung nach einem der vorhergehenden Ansprüche, **dadurch gekennzeichnet, dass** stromauf zur Rückführstelle des Abgasteilstroms (3) im Abgasstrom (2) ein Oxidationskatalysator angeordnet ist, der zumindest einen Teil des im Abgas enthaltenen Stickstoffinonoxids mittels des im Abgas enthaltenen Restsauerstoffes in Stickstoffdioxid überführt.

7. Anordnung nach einem der vorhergehenden Ansprüche, **dadurch gekennzeichnet, dass** stromab zur Zuführstelle des Reduktionsmittels in den Abgasteilstrom (3) und stromauf zur Rückführstelle des Abgasteilstroms (3) in den Abgasstrom (2) ein Hydrolysekatalysator (16) angeordnet ist.

8. Anordnung nach einem der vorhergehenden Ansprüche, **dadurch gekennzeichnet, dass** stromab zum Abzweig des Abgasteilstroms (3) vom Abgasstrom (2) und stromauf zur Zuführstelle des Reduktionsmittels in den Abgasteilstrom (3) ein weiterer Oxidationskatalysator (17) zur Oxidation von Reduktionsmittelzersetzungsprodukten und/ oder Kohlenwasserstoffen und/ oder Kohlenmonoxid angeordnet ist.

9. Anordnung nach einem der vorhergehenden Ansprüche, **dadurch gekennzeichnet, dass** stromab zum Abzweig des Abgasteilstroms (3) vom Abgasstrom (2) und stromauf zur Zuführstelle des Reduktionsmittels in den Abgasteilstrom (3) ein weiterer SCR-Katalysator (17) angeordnet ist.

10. Anordnung nach einem der vorhergehenden Ansprüche, **dadurch gekennzeichnet, dass** stromab zur Zuführstelle des Reduktionsmittels und stromauf der Rückführstelle des Abgasteilstroms (3) vom Abgasstrom (2) ein weiterer SCR-Katalysator angeordnet ist.

11. Anordnung nach einem der vorhergehenden Ansprüche, **dadurch gekennzeichnet, dass** stromauf oder stromab des SCR-Katalysators (9) ein Partikelabscheider (22) oder Partikelfilter angeordnet ist.

12. Anordnung nach einem der vorhergehenden Ansprüche, **dadurch gekennzeichnet, dass** stromab zur Rückführstelle des Abgasteilstroms (3) in den Abgasstrom (2) und stromauf zum SCR-Katalysator 9 ein Partikelabscheider (22) oder Partikelfilter angeordnet ist.

13. Anordnung nach einem der vorhergehenden Ansprüche, **dadurch gekennzeichnet, dass** stromab oder stromauf zum Sperrorgan (10) wenigstens eine Turbine (19) wenigstens eines Turboladers (20) angeordnet ist wobei die Turbine (19) einen Verdichter (21) treibt, der der Brennkraftmaschine (1) verdichtete Luft zuführt.

14. Anordnung nach einem der vorhergehenden Ansprüche, **dadurch gekennzeichnet, dass** dem SCR-Katalysator ein Ammoniaksperrkatalysator (14) nachgeordnet ist, der im SCR-Katalysator nicht verbrauchten überschüssigen Ammoniak in Stickstoff überführt.

15. Anordnung nach einem der vorhergehenden Ansprüche, **dadurch gekennzeichnet, dass** während des Motorbremsbetriebs die Zuführung des Reduktionsmittels verringert oder ganz eingestellt wird.

16. Anordnung nach einem der vorhergehenden Ansprüche, **dadurch gekennzeichnet, dass** während des Motorbremsbetriebs die Zuführung einer vorgebbaren Kraftstoffmenge in wenigstens einen Brennraum der Brennkraftmaschine (1) so erfolgt, dass diese Kraftstoffmenge unverbrannt in den Abgastrakt gelangt und dass im Abgasteilstrom (3) stromab zum Abzweig des Abgasteilstroms (3) und stromauf zur Zuführstelle des Reduktionsmittels in dem Abgasteilstrom (3) ein Oxidationskatalysator (17) angeordnet ist, der den Kraftstoff in einer exothermen Reaktion oxidiert.

17. Anordnung nach einem der vorhergehenden Ansprüche, **dadurch gekennzeichnet, dass** die SCR-Katalysatoren (9, 18) als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten

18. Anordnung nach einem der vorhergehenden Ansprüche, **dadurch gekennzeichnet, dass** die Oxidationskatalysatoren (8, 17, 14) als Aktivkomponenten Platin und/oder Palladium und/oder Rhodium und/oder deren Oxide und/oder Zeolithe enthalten

19. Anordnung nach einem der vorhergehenden Ansprüche, **dadurch gekennzeichnet, dass** der Hydrolysekatalysator (16) als Aktivkomponente Titan und/oder Silizium und/oder Vanadium und/oder Wolfram und/oder deren Oxide und/oder Zeolithe enthält.

## Claims

1. A self-cleaning exhaust aftertreatment system for the removal of nitrogen oxides from the exhaust of an internal combustion engine installed in a vehicle, the removal of the nitrogen oxides taking place with the aid of selective catalytic reduction such that a reducing agent which splits off ammonia is added to the exhaust upstream from an SCR catalyst and the SCR catalyst converts the nitrogen oxides contained in the exhaust at least partially into nitrogen and water vapour with the aid of the ammonia released from the reducing agent, and wherein at least a smaller partial exhaust stream (3) branches off from the exhaust stream (2), the admetering of the reducing agent takes place into the partial exhaust stream (3) and the partial exhaust stream (3) opens back into the exhaust stream (2) downstream from the supplying of the reducing agent,
**characterised in that** deposits, in particular cyanuric acid, ammelide, ammeline and melamine, are removed thermically from the exhaust aftertreatment system, with
- the internal combustion engine (1) being equipped with an engine brake, such that the internal combustion engine (1) which in non-functioning operation operates as a compressor is driven by the kinetic energy of the vehicle, compresses the combustion air supplied to the internal combustion engine (1), in so doing heats it up and presses it into the exhaust system, and brakes the vehicle by this compression work,
- downstream from the branching-off point of the partial exhaust stream (3) from the exhaust stream (2) and upstream from the point of return of the partial exhaust stream (3) into the exhaust stream (2), a shut-off member (10) being arranged in the exhaust stream (2), with which member the exhaust stream (2) can be at least partially shut off parallel to the partial exhaust stream (3), such that in engine braking operation the exhaust heated up by the compression work of the internal combustion engine (1) passes into the partial exhaust stream (3) and there thermically dissolves any deposits of cyanuric acid, ammelide, ammeline and melamine,
- an SCR catalyst (9) for the selective catalytic reduction of the nitrogen oxides in the exhaust from the internal combustion engine (1) being arranged downstream from the point of return of the partial exhaust stream (3) into the exhaust stream (2).

2. An arrangement according to Claim 1, **characterised in that** the shut-off member (10) can be driven by means of a first drive (11), the first drive (11) being able to be under open-loop or closed-loop control via an electronic control unit (4).

3. An arrangement according to Claim 1, **characterised in that** a control member (12) is arranged in the partial exhaust stream (3), by means of which member the partial exhaust stream (3) can be entirely or partially shut off.

4. An arrangement according to one of the preceding claims, **characterised in that** the control member (12) can be driven by means of a second drive (13), the second drive (13) being able to be under open-loop or closed-loop control via the electronic control unit (4).

5. An arrangement according to Claim 1, **characterised in that** the engine brake is an exhaust brake and/or a decompression brake and/or the vehicle is braked by opening the exhaust valves, at a time which differs from the functioning operation.

6. An arrangement according to one of the preceding claims, **characterised in that** an oxidation catalyst is arranged upstream from the point of return of the partial exhaust stream (3) in the exhaust stream (2), which catalyst converts at least a portion of the nitrogen monoxide contained in the exhaust into nitrogen dioxide by means of the residual oxygen contained in the exhaust.

7. An arrangement according to one of the preceding claims, **characterised in that** a hydrolysis catalyst (16) is arranged downstream from the point of supply of the reducing agent into the partial exhaust stream (3) and upstream from the point of return of the partial exhaust stream (3) into the exhaust stream (2).

8. An arrangement according to one of the preceding claims, **characterised in that** a further oxidation catalyst (17) for the oxidation of reducing-agent decomposition products and/or hydrocarbons and/or carbon monoxide is arranged downstream from the branching-off point of the partial exhaust stream (3) from the exhaust stream (2) and upstream from the point of supply of the reducing agent into the partial exhaust stream (3).

9. An arrangement according to one of the preceding claims, **characterised in that** a further SCR catalyst (17) is arranged downstream from the branching-off point of the partial exhaust stream (3) from the exhaust stream (2) and upstream from the point of supply of the reducing agent into the partial exhaust stream (3).

10. An arrangement according to one of the preceding claims, **characterised in that** a further SCR catalyst is arranged downstream from the point of supply of the reducing agent and upstream from the point of return of the partial exhaust stream (3) from [sic] the exhaust stream (2).

11. An arrangement according to one of the preceding claims, **characterised in that** a particle separator (22) or particle filter is arranged upstream or downstream from the SCR catalyst (9).

12. An arrangement according to one of the preceding claims, **characterised in that** a particle separator (22) or particle filter is arranged downstream from the point of return of the partial exhaust stream (3) into the exhaust stream (2) and upstream from the SCR catalyst 9.

13. An arrangement according to one of the preceding claims, **characterised in that** at least one turbine (19) of at least one turbocharger (20) is arranged downstream or upstream from the shut-off member (10), the turbine (19) driving a compressor (21) which supplies compressed air to the internal combustion engine (1).

14. An arrangement according to one of the preceding claims, **characterised in that** the SCR catalyst is succeeded by an ammonia blocking catalyst (14) which converts excess ammonia not consumed in the SCR catalyst into nitrogen.

15. An arrangement according to one of the preceding claims, **characterised in that** the supply of the reducing agent is reduced or stopped entirely during the engine braking operation.

16. An arrangement according to one of the preceding claims, **characterised in that** during the engine braking operation the supplying of a pre-settable amount of fuel into at least one combustion chamber of the internal combustion engine (1) takes place such that this amount of fuel passes unburned into the exhaust system and that an oxidation catalyst (17) is arranged in the partial exhaust stream (3) downstream from the branching-off point of the partial exhaust stream (3) and upstream from the point of supply of the reducing agent into the partial exhaust stream (3), which catalyst oxidises the fuel in an exothermic reaction.

17. An arrangement according to one of the preceding claims, **characterised in that** the SCR catalysts (9, 18) contain vanadium and/or vanadium pentoxide and/or titanium dioxide and/or tungsten oxide and/or copper-containing zeolites and/or iron-containing zeolites and/or cobalt-containing zeolites as active constituent.

18. An arrangement according to one of the preceding claims, **characterised in that** the oxidation catalysts (8, 17, 14) contain platinum and/or palladium and/or rhodium and/or their oxides and/or zeolites as active constituents.

19. An arrangement according to one of the preceding claims, **characterised in that** the hydrolysis catalyst (16) contains titanium and/or silicon and/or vanadium and/or tungsten and/or their oxides and/or zeolites as active constituents.

## Revendications

1. Système autonettoyant de post-traitement des gaz d'échappement pour éliminer les oxydes d'azote des gaz d'échappement d'un moteur à combustion interne équipant un véhicule, selon lequel
on élimine les oxydes d'azote par réduction catalytique sélective en ajoutant aux gaz d'échappement, en amont d'un catalyseur SCR, un agent réducteur qui donne de l'ammoniac, et le catalyseur SCR transforme les oxydes d'azote des gaz d'échappement à l'aide de l'ammoniac dégagé de l'agent réducteur, au moins en partie en azote et en vapeur d'eau, et
on dérive de la veine des gaz d'échappement (2) au moins une petite fraction de gaz d'échappement (3) pour doser l'agent réducteur dans la fraction des gaz d'échappement (3) et réinjecter la fraction des gaz d'échappement (3) de nouveau dans la veine des gaz d'échappement (2) en aval, pour fournir l'agent réducteur,
système **caractérisé en ce que**
on élimine thermique les dépôts notamment d'acide cyanurique, d'ammélure, d'amméline et de mélamine du système de post-traitement des gaz d'échappement,
**en ce que**:
- le moteur à combustion interne (1) étant équipé d'un frein moteur de façon que le moteur (1) non commandé en combustion, fonctionne comme compresseur et, entraîné par l'énergie cinétique du véhicule, comprime l'air comburant alimentant le moteur (1) et fournit cet air à la conduite des gaz d'échappement en freinant ainsi le véhicule par ce travail de compression,
- en aval de la dérivation de la fraction des gaz d'échappement (3) prélevés sur la veine des gaz d'échappement (2) et en amont du point de réinjection de la fraction des gaz d'échappement (3) dans la veine des gaz d'échappement (2), un organe d'arrêt (10) dans la veine des gaz d'échappement (2) permet d'arrêter au moins en partie la veine des gaz d'échappement (2) en parallèle à la fraction des gaz d'échappement (3) de façon qu'en mode de fonctionnement en frein moteur, les gaz d'échappement chauffés par le travail de compression effectué par le moteur à combustion interne (1), arrivent dans la fraction des gaz d'échappement (3) pour y dissoudre thermiquement les éventuels dépôts d'acide cyanurique, d'ammélure, d'amméline et de mélamine,
- en aval du point de réinjection de la fraction des gaz d'échappement (3) dans la veine des gaz d'échappement (2), un catalyseur SCR (9) assure la réduction catalytique sélective des oxydes d'azote contenus dans les gaz d'échappement du moteur à combustion interne (1).

2. Système selon la revendication 1,
**caractérisé en ce que**
l'organe d'arrêt (10) est commandé par un premier moyen d'entraînement (11),
le premier moyen d'entraînement (11) étant commandé ou régulé par une unité de commande électronique (4).

3. Système selon la revendication 1,
**caractérisé par**
un organe de commande (12) installé dans la fraction des gaz d'échappement (3) pour arrêter totalement ou partiellement la fraction des gaz d'échappement (3).

4. Système selon l'une des revendications précédentes,
**caractérisé en ce que**
l'organe de commande (12) est entraîné par un second moyen d'entraînement (13),
le second moyen d'entraînement (13) est commandé ou régulé par l'unité de commande électronique (4).

5. Système selon la revendication 1,
**caractérisé en ce que**
le frein moteur est un frein moteur à accumulation et/ou un frein à décompression et/ou le véhicule est freiné par l'ouverture des soupapes d'échappement à un instant différant de celui du mode de fonctionnement avec allumage commandé.

6. Système selon l'une des revendications précédentes,
**caractérisé en ce qu'**
en amont du point de réinjection de la fraction des gaz d'échappement (3) dans la veine des gaz d'échappement (2), un catalyseur d'oxydation transforme au moins une partie du monoxyde d'azote contenu dans les gaz d'échappement en dioxyde d'azote avec l'oxygène résiduel contenu dans les gaz d'échappement.

7. Système selon l'une des revendications précédentes,
**caractérisé par**
un catalyseur d'hydrolyse (16) installé en aval du point d'injection de l'agent réducteur dans la fraction des gaz d'échappement (3) et en amont du point d'injection de la fraction des gaz d'échappement (3) dans la veine des gaz d'échappement (2).

8. Système selon l'une des revendications précédentes,
**caractérisé par**
un autre catalyseur d'oxydation (17) pour oxyder les produits de décomposition de l'agent réducteur et/ou les hydrocarbures et/ou le monoxyde de carbone en aval de la dérivation de la fraction des gaz d'échappement (3) de la veine des gaz d'échappement (2) et en amont du point d'injection de l'agent réducteur dans la fraction des gaz d'échappement (3).

9. Système selon l'une des revendications précédentes,
**caractérisé par**
un autre catalyseur SCR (17) installé en aval de la dérivation de la fraction des gaz d'échappement (3) de la veine des gaz d'échappement (2) et en amont du point de réinjection de l'agent réducteur dans la fraction des gaz d'échappement (3).

10. Système selon l'une des revendications précédentes,
**caractérisé par**
un autre catalyseur SCR installé en aval du point d'injection de l'agent réducteur et en amont du point de réinjection de la fraction des gaz d'échappement (3) de la veine des gaz d'échappement (2).

11. Système selon l'une des revendications précédentes,
**caractérisé par**
un séparateur de particules (22) ou filtre à particules installé en amont ou en aval du catalyseur SCR (9).

12. Système selon l'une des revendications précédentes,
**caractérisé par**
un séparateur de particules (22) ou filtre à particules installé en aval du point de réinjection de la fraction des gaz d'échappement (3) dans la veine des gaz d'échappement (2) et en amont du catalyseur SCR (9).

13. Système selon l'une des revendications précédentes,
**caractérisé par**
au moins une turbine (19) faisant partie au moins d'un turbocompresseur (20) est installée en amont ou en aval de l'organe d'arrêt (10), et
la turbine (19) entraîne un compresseur (21) comprimant l'air alimentant le moteur à combustion interne (1).

14. Système selon l'une des revendications précédentes,
**caractérisé par**
un catalyseur de blocage d'ammoniac (14) installé en aval du catalyseur SCR qui transforme en azote, l'ammoniac en excédent non consommé par le catalyseur SCR.

15. Système selon l'une des revendications précédentes,
**caractérisé en ce que**
l'alimentation en agent réducteur est diminuée ou est totalement arrêtée pendant le fonctionnement en frein moteur.

16. Système selon l'une des revendications précédentes,
**caractérisé en ce que**
pendant le fonctionnement en frein moteur, l'alimentation d'une dose prédéterminée de carburant est assurée dans au moins une chambre de combustion du moteur à combustion interne (1), cette dose de carburant arrive imbrûlée dans la conduite des gaz d'échappement et un catalyseur d'oxydation (17) installé dans la fraction des gaz d'échappement (3) en aval de la dérivation de la fraction des gaz d'échappement (3) et en amont du point d'injection de l'agent réducteur dans la fraction des gaz d'échappement (3), oxyde le carburant par une réaction exothermique.

17. Système selon l'une des revendications précédentes,
**caractérisé en ce que**
les catalyseurs SCR (9, 18) comportent comme composants actifs du vanadium et/ou du pentoxyde de vanadium et/ou du dioxyde de titane et/ou de l'oxyde de tungstène et/ou des zéolithes contenant du cuivre et/ou des zéolithes contenant du fer et/ou des zéolithes contenant du cobalt.

18. Système selon l'une des revendications précédentes,
**caractérisé en ce que**
les catalyseurs d'oxydation (8, 17, 14) contiennent comme composants actifs du platine et/ou du palladium et/ou du rhodium et/ou leurs oxydes et/ou des zéolithes.

19. Système selon l'une des revendications précédentes,
**caractérisé en ce que**
le catalyseur d'hydrolyse (16) contient comme composants actifs du titane et/ou du silicium et/ou du vanadium et/ou du tungstène et/ou leurs oxydes et/ou des zéolithes.
